# EUROPÄISCHE PATENTANMELDUNG

(11) **EP 3 361 617 A1**
(43) Veröffentlichungstag der Anmeldung: **15.08.2018**
(21) Anmeldenummer: 17156013.9
(22) Anmeldetag: 14.02.2017
(51) Int. Cl.: H02M 5/297, H02M 7/48, H02M 1/00

(54) **GLEICHRICHTERSCHALTUNG FÜR EINE ELEKTROLYSE-ANLAGE**

(71) Anmelder: Siemens Aktiengesellschaft, 80333 München (DE)
(72) Erfinder: Namyslo, Lutz, 91353 Hausen (DE); Mondal, Gopal, 91058 Erlangen (DE); Nielebock, Sebastian, 91301 Forchheim (DE)

(57) **Zusammenfassung**

Gleichrichterschaltung zur Wandlung einer eingangsseitig anliegenden Wechselspannung mit einer Netzfrequenz, insbesondere aus einem Mittelspannungsnetzwerk mit einer Spannung von zwischen 1 kV und 100 kV, in eine ausgangsseitige Gleichspannung für eine Elektrolyse-Anlage, mit
- wenigstens einem modularen Mehrpunktstromrichter, ausgestaltet zur Wandlung der Wechselspannung in eine zweite, ein- oder mehrphasige Wechselspannung mit einer gegenüber der Netzfrequenz erhöhten Frequenz,
- einem Transformator zur galvanisch getrennten Weitergabe der zweiten Wechselspannung,
- einem Gleichrichter,
wobei der Transformator zwischen den Gleichrichter und den modularen Mehrpunktstromrichter geschaltet ist und der Gleichrichter ausgangsseitig die Gleichspannung bereitstellt.

## Beschreibung

Die Erfindung betrifft eine Gleichrichterschaltung zur Wandlung einer eingangsseitig anliegenden Wechselspannung mit einer Netzfrequenz, insbesondere aus einem Mittelspannungsnetzwerk mit einer Spannung von zwischen 1 kV und 100 kV, in eine ausgangsseitig gelieferte Gleichspannung für eine Elektrolyse-Anlage sowie ein Verfahren zur Bereitstellung einer Gleichspannung für die Elektrolyse-Anlage.

Die Stromversorgung von Hochleistungs-Elektrolyse-Anlagen kann beispielsweise mittels einer 6-Puls-Thyristorbrücke erfolgen. Durch die hohen Leistungsanforderungen bedingt wird die Thyristorbrücke typischerweise von einem dreiphasigen Transformator gespeist, dessen Primärseite an die Mittelspannung angeschlossen ist und dessen Sekundärseite eine Niederspannung bei hohen Strömen ausgibt. Neben Robustheit und einfachem Aufbau hat diese Art der Stromversorgung aber den Nachteil eines hohen Blindleistungsbedarfs durch die Thyristorbrücke, die eine Überdimensionierung des Transformators und angeschlossener Unterbrecher erforderlich macht. Diese wiederum führen zu unnötig hohen Verlusten in der Stromversorgung selbst und auch im Versorgungsnetz. Weiterhin führen erhebliche Oberschwingungen, die durch die Stromversorgung verursacht werden, zu einer verringerten Effizienz der Stromversorgung. Schließlich benötigen der Transformator sowie notwendige Kompensationsanlagen für Blindleistung und Oberschwingungen einen erheblichen Bauraum.

Es ist Aufgabe der vorliegenden Erfindung, eine Gleichrichterschaltung für eine Elektrolyse-Anlage anzugeben, die die eingangs genannten Nachteile vermindert oder beseitigt. Eine weitere Aufgabe besteht in der Angabe eines Verfahrens zur Bereitstellung einer Gleichspannung für die Elektrolyse-Anlage.

Die Aufgabe wird durch eine Gleichrichterschaltung mit den Merkmalen von Anspruch 1 gelöst. Eine weitere Lösung der Aufgabe besteht in einem Verfahren mit den Merkmalen von Anspruch 8. Die unabhängigen Ansprüche betreffen vorteilhafte Ausgestaltungen.

Die erfindungsgemäße Gleichrichterschaltung ist ausgestaltet zur Wandlung einer eingangsseitig anliegenden Wechselspannung mit einer Netzfrequenz von beispielsweise 50 Hz oder 60 Hz, insbesondere aus einem Mittelspannungsnetzwerk mit einer Spannung von zwischen 1 kV und 100 kV, in eine ausgangsseitig gelieferte Gleichspannung für eine Elektrolyse-Anlage.

Die Gleichrichterschaltung umfasst wenigstens einen modularen Mehrpunktstromrichter, ausgestaltet zur Wandlung der Wechselspannung in eine zweite, ein- oder dreiphasige Wechselspannung mit einer gegenüber der Netzfrequenz erhöhten Frequenz, einen Transformator zur galvanisch getrennt Weitergabe der zweiten Wechselspannung und Heruntersetzen der Spannung in ein Niederspannungsniveau und einen Gleichrichter, wobei der Transformator zwischen den Gleichrichter und den modularen Mehrpunktstromrichter geschaltet ist und der Gleichrichter ausgangsseitig die Gleichspannung bereitstellt.

Unter einem modularen Mehrpunktstromrichter, häufig als Modular Multilevel Converter, MMC oder M2C bezeichnet, wird dabei gemäß der in der Fachwelt verbreiteten Definition ein Wandler verstanden, der zur Ausgangsseite hin drei Anschlüsse aufweist und zur Eingangsseite hin zwei Anschlüsse. Jeder der drei Anschlüsse ist in die Mitte eines jeweiligen Phasenarms geschaltet, der zu beiden Seiten hin unter anderem eine Serie von Modulen aufweist, die jeweils einen Energiespeicher und Mittel zum Überbrücken oder Zuschalten des Energiespeichers in die Serie aufweist. Die Außenanschlüsse der Phasenarme sind zusammengeschlossen zu den zwei Anschlüssen der Eingangsseite. Die Bezeichnung als Ein- und Ausgangsseite ist hierbei beliebig vertauschbar und hängt vom Einsatz des modularen Mehrpunktstromrichters ab.

Bei dem erfindungsgemäßen Verfahren zur Bereitstellung einer Gleichspannung für eine Elektrolyse-Anlage wird eine eingangsseitig anliegende Wechselspannung mit einer Netzfrequenz, insbesondere aus einem Mittelspannungsnetzwerk mit einer Spannung von zwischen 1 kV und 100 kV, in eine ausgangsseitige Gleichspannung für eine Elektrolyse-Anlage gewandelt, wobei
- wenigstens ein modularen Mehrpunktstromrichter verwendet wird, die Wechselspannung in eine zweite, ein- oder mehrphasige Wechselspannung mit einer gegenüber der Netzfrequenz erhöhten Frequenz zu wandeln,
- ein Transformator die zweite Wechselspannung galvanisch getrennt weitergibt,
- ein Gleichrichter die weitergegebene zweite Wechselspannung gleichrichtet und ausgangsseitig die Gleichspannung bereitstellt.

Vorteilhaft wird durch die Erfindung eine Gleichrichterschaltung geschaffen, die ohne einen Gleichspannungs-Zwischenkreis auskommt. Durch die Verwendung des modularen Mehrpunktstromrichters kann der Leistungsfaktor eingestellt werden und optimal gehalten werden. Dadurch ist es auch möglich, den Leistungsfaktor zu kontrollieren und das Versorgungsnetzwerk durch bereitgestellte Blindleistung zu stabilisieren.

Im Gegensatz zu bekannten Stromversorgungen für Elektrolyse-Anlagen, die eine Phasenanschnitt-Steuerung mit Thyristoren verwenden, sind die Netzrückwirkungen der erfindungsgemäßen Gleichrichterschaltung deutlich vermindert. Der modulare Mehrpunktstromrichter kann so angesteuert werden, dass der von ihm aufgenommene Strom sinusförmig ist. Dabei kann dennoch die von ihm erzeugte zweite Wechselspannung in ihrem Spannungsniveau angepasst werden.

Schließlich ist bekannt, dass der benötigte Strom bei Elektrolyse-Anlagen stark durch die Alterung der Elektrolysezellen und durch die Temperatur beeinflusst wird. Bei einer Stromversorgung mit Phasenanschnitt-Steuerung bewirken diese Veränderungen eine zeitlich variable Blindleistung. Das wiederum erfordert eine größere Auslegung von verwendeten Transformatoren und eine höhere Belastung für das Versorgungsnetzwerk. Bei der Erfindung hingegen sind diese Nachteile überwundern, da Veränderungen im Strombedarf der Elektrolysezellen in der Elektrolyse-Anlage durch den modularen Mehrpunktstromrichter stets ausgeglichen werden können, ohne dabei die Blindleistung zu verändern.

Weiterhin werden durch den modularen Mehrpunktstromrichter die Oberschwingungen auf der erzeugten Spannung minimiert. Oberwellen im Strom können durch eine geeignete Ansteuerung vermindert werden. Die zur Filterung benötigten Bauteile werden drastisch reduziert.

Vorteilhafte Ausgestaltungen der erfindungsgemäßen Einrichtung gehen aus den von Anspruch 1 abhängigen Ansprüchen hervor. Dabei kann die Ausführungsform nach Anspruch 1 mit den Merkmalen eines der Unteransprüche oder vorzugsweise auch mit denen aus mehreren Unteransprüchen kombiniert werden. Demgemäß können für den Stromwandler noch zusätzlich folgende Merkmale vorgesehen sein:
- Die zweite Wechselspannung kann eine Frequenz von zwischen 500 Hz und 50 kHz aufweisen. In einer besonderen Ausgestaltung beträgt die Frequenz zwischen 5 kHz und 20 kHz. Durch die erhöhte Frequenz kann die Baugröße des Transformators deutlich reduziert werden im Vergleich zu einem Transformator für Netzfrequenz.
- Zweckmäßig beträgt die Spannung der zweiten Wechselspannung, also am Ausgang des modularen Mehrpunktstromrichters, zwischen 4 kV und 20 kV. Damit ist eine optimierte Versorgung für typische Elektrolyse-Anlagen gegeben, bei der ein Ausgleich zwischen hohen Stromstärken und großen Spannungswerten gegeben ist.
- Die zweite Wechselspannung kann eine einphasige Wechselspannung sein. In diesem Fall ist der Transformator zweckmäßig auch ein einphasiger Transformator. Dieser ist einfacher herzustellen als ein dreiphasiger Transformator.
- Als Gleichrichter kann ein diodenbasierter, ungesteuerter Gleichrichter, insbesondere ein Einweg-Gleichrichter, ein Mittelpunktgleichrichter oder ein Brückengleichrichter verwendet werden. Diese sind vorteilhaft sehr einfach im Aufbau.
- Für die Umsetzung der Wechselspannung in die zweite Wechselspannung ist es zweckmäßig, wenn der modulare Mehrpunktstromrichter Module umfasst, die ihrerseits jeweils eine H-Brücke aufweisen.
- Die zweite Wechselspannung kann eine dreiphasige Wechselspannung sein. In diesem Fall werden bevorzugt drei modulare Mehrpunktstromrichter zur Wandlung verwendet. Deren Ausgänge sind in einer Delta- oder Sternschaltung verbunden. Die modularen Mehrpunktstromrichter bilden zusammen einen Direktumrichter aus. In diesem Fall wird zweckmäßig ein dreiphasiger Transformator verwendet, so dass eine dreiphasige Spannung an den Gleichrichter weitergegeben wird.
- Für die Gleichrichtung einer dreiphasigen zweiten Wechselspannung kann ein ungesteuerter Sechspuls-Brückengleichrichter verwendet werden. Dieser ist einfach im Aufbau bei optimalem Grundschwingungsleistungsfaktor. Eine Steuerung des Gleichrichters ist nicht erforderlich.
- Der dreiphasige Transformator kann ein 12-Puls-Transformator mit geschwenkten Sekundärwicklungen sein. In diesem Fall umfasst der Gleichrichter zwei getrennte 6-Puls-Brückengleichrichter.
- An der Stelle eines der modularen Mehrpunktstromrichter können stets mehrere modulare Mehrpunktstromrichter in Parallelschaltung verwendet werden, um eine höhere Leistung zu ermöglichen. Diese können als getrennte, individuelle Mehrpunktstromrichter aufgebaut sein oder als zusammengesetzter Mehrpunktstromrichter, der mehrere parallele Arme pro Phase aufweist.
- Der oder die modularen Mehrpunktstromrichter können mehr Module aufweisen, als nach Auslegung der Elektrolyse-Anlage notwendig. Durch diese redundante Auslegung wird erreicht, dass ein Ausfall eines oder sogar mehrerer der Module keine Einschränkungen der Funktion des jeweiligen Mehrpunktstromrichters zur Folge haben.

Die Gleichrichterschaltung wird bevorzugt zur Bereitstellung elektrischer Energie für eine Hochleistungs-Elektrolyse-Anlage mittels einer Gleichspannung verwendet, wobei eingangsseitig eine Mittelspannung des Versorgungsnetzwerks angeschlossen ist.

Die Erfindung wird nachfolgend anhand von bevorzugten Ausführungsbeispielen unter Bezugnahme auf die Zeichnung noch weiter erläutert. Dabei zeigen in schematisierter Form
- Figur 1: eine Ausführungsform der erfindungsgemäßen Gleichrichterschaltung,
- Figur 2: ein Aufbauschema für einen modularen Mehrpunktstromrichter in der Gleichrichterschaltung,
- Figur 3: ein Aufbauschema für ein Modul des modularen Mehrpunktstromrichters,
- Figur 4: Aufbauvarianten für den AC/DC-Wandler der Gleichrichterschaltung,
- Figur 5: eine weitere Ausführungsform der erfindungsgemäßen Gleichrichterschaltung,
- Figur 6: ein Aufbauschema für einen dreiphasigen AC/AC-Wandler in der Gleichrichterschaltung,
- Figur 7: eine Aufbauform für den AC/DC-Wandler der Gleichrichterschaltung.

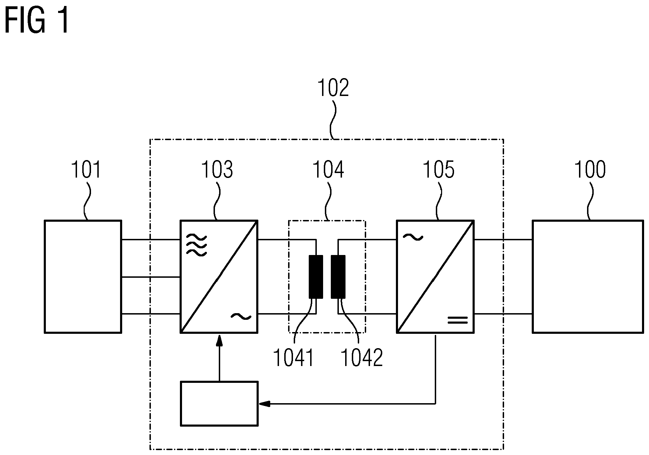

Figur 1 zeigt ein Blockdiagramm eines Elektrolysesystems. Das Elektrolysesystem umfasst eine nicht näher gezeigte Elektrolyseanlage 100, die elektrisch vom Versorgungsnetzwerk 101 gespeist wird. Zwischen dem Versorgungsnetzwerk 101 und der Elektrolyseanlage 100 ist ein erster Gleichrichtersystem 102 angeordnet, der die Wandlung der Wechselspannung aus dem Versorgungsnetzwerk 101 in eine für die Elektrolyseanlage 100 verwendbare Gleichspannung vornimmt. Bei dem Versorgungsnetzwerk 101 handelt es sich im vorliegenden Beispiel um ein dreiphasiges Mittelspannungsnetzwerk, beispielsweise bei einer Spannung von 20 kV.

Der erste Gleichrichter umfasst einen AC/AC-Wandler 103, einen einphasigen Transformator 104 und einen AC/DC-Wandler 105. Dabei ist der AC/AC-Wandler 103 eingangsseitig mit dem Versorgungsnetzwerk 101 gekoppelt und ausgangsseitig mit dem Transformator 104. Der Transformator 104 ist ausgangsseitig mit dem AC/DC-Wandler 105 verbunden. Der AC/DC-Wandler 105 wiederum ist ausgangsseitig an die Elektrolyseanlage 100 angeschlossen.

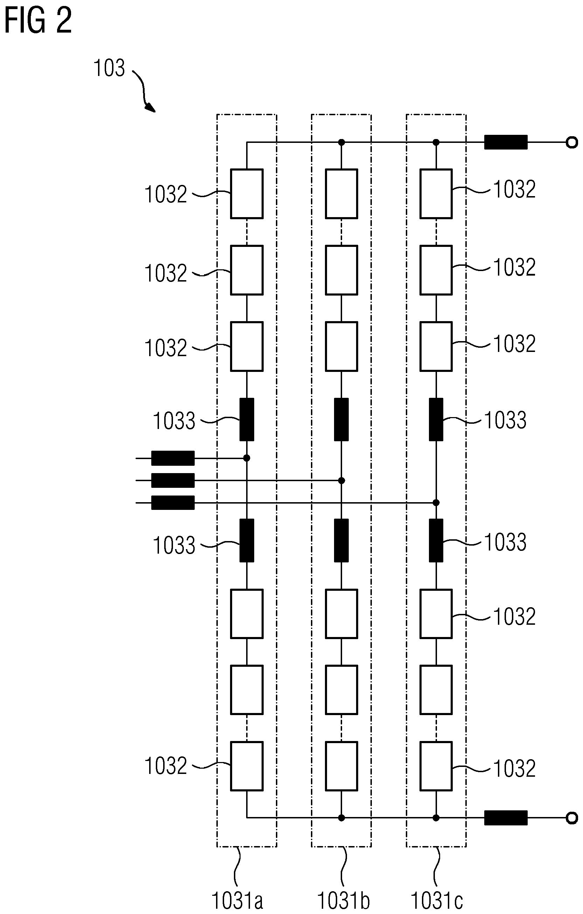

Der AC/AC-Wandler 103 ist als modularer Mehrpunktstromrichter ausgestaltet. Figur 2 zeigt den Aufbau des AC/AC-Wandlers 103. Eingangsseitig verfügt der AC/AC-Wandler 103 über drei Anschlüsse, die im vorliegenden Beispiel mit den Phasen des Versorgungsnetzwerks 101 verbunden sind. Jeder der drei Anschlüsse führt in die Mitte eines Phasenarms 1031a...c. Jeder der Phasenarme weist zu beiden Seiten der Mitte eine Serie aus einer Induktivität und einer Mehrzahl von Modulen 1032 auf. Typischerweise umfasst jeder der Phasenarme 1031a...c zwischen 10 und 50 dieser Module 1032. Die Außenanschlüsse der Phasenarme 1031a...c sind auf Ober- und Unterseite zu den zwei Ausgangsanschlüssen zusammengeschlossen, die ihrerseits mit dem Transformator 104 verbunden sind.

Die Module 1032 können verschieden komplex aufgebaut sein. Generell umfassen sie zwei Anschlüsse und einen Energiespeicher, typischerweise einen Kondensator 1032a. Der Kondensator 1032a ist typischerweise so mit Schaltern 1032b, beispielsweise IGBTs, verschaltet, dass er durch passende Schalthandlungen der Schalter 1032b alternativ zwischen die Anschlüsse geschaltet sein kann oder überbrückt sein kann. Im vorliegenden Beispiel handelt es sich bei den Modulen 1032 um Vollbrücken-Module, bei denen der Kondensator 1032a parallel zu den Außenanschlüssen der zwei Halbbrücken einer Vollbrücke mit vier Schaltern 1032b geschaltet ist. Die Mittelpunkte der beiden Halbbrücken bilden die beiden Anschlüsse des Moduls 1032.

Häufig werden modulare Mehrpunktstromrichter des Aufbaus nach Figur 2 als Wechselrichter eingesetzt, die eine an den Außenanschlüssen der Phasenarme 1031a...c anliegende Gleichspannung in eine dreiphasige Wechselspannung umsetzen. Der komplexe Aufbau bewirkt dabei eine feingranulierte Konstruktion der Sinuswellen, die für sehr geringe Oberschwingungen sorgt und somit die Notwendigkeit bauraumintensiver und teurer Filterelemente deutlich verringert.

Im vorliegenden Ausführungsbeispiel wird der AC/AC-Wandler 103 in Form eines modularen Mehrpunktstromrichters jedoch zur Umsetzung der dreiphasigen Wechselspannung mit Netzfrequenz, beispielsweise 50 Hz oder 60 Hz, in eine einphasige Wechselspannung einer deutlich erhöhten Frequenz von beispielsweise 15 kHz verwendet. Die Steuerung des AC/AC-Wandlers 103 ist dementsprechend ausgestaltet, die Module so anzusteuern, dass aus der eingangsseitig anliegenden dreiphasigen Wechselspannung eine hochfrequente einphasige Wechselspannung aufgebaut wird.

Die hochfrequente einphasige Wechselspannung, die der AC/AC-Wandler 103 erzeugt, wird an die Primärseite des Transformators 104 angelegt. Der Transformator ist durch eine geeignete Auslegung der Wicklungen ausgelegt, die primärseitige Spannung von dem vorhandenen Mittelspannungsniveau von beispielsweise 4 kV in ein Niederspannungsniveau zu transformieren. Das Spannungsniveau ist im vorliegenden Beispiel variabel und richtet sich nach den Anforderungen der Elektrolyseanlage 100. Die Spannung beträgt generell zwischen 100 V und 1000 V. Die Frequenz der Wechselspannung wird dabei durch den Transformator 104 nicht verändert, ist also auch nach dem Transformator 104 noch eine im Vergleich zur Netzfrequenz hohe Frequenz von 15 kHz.

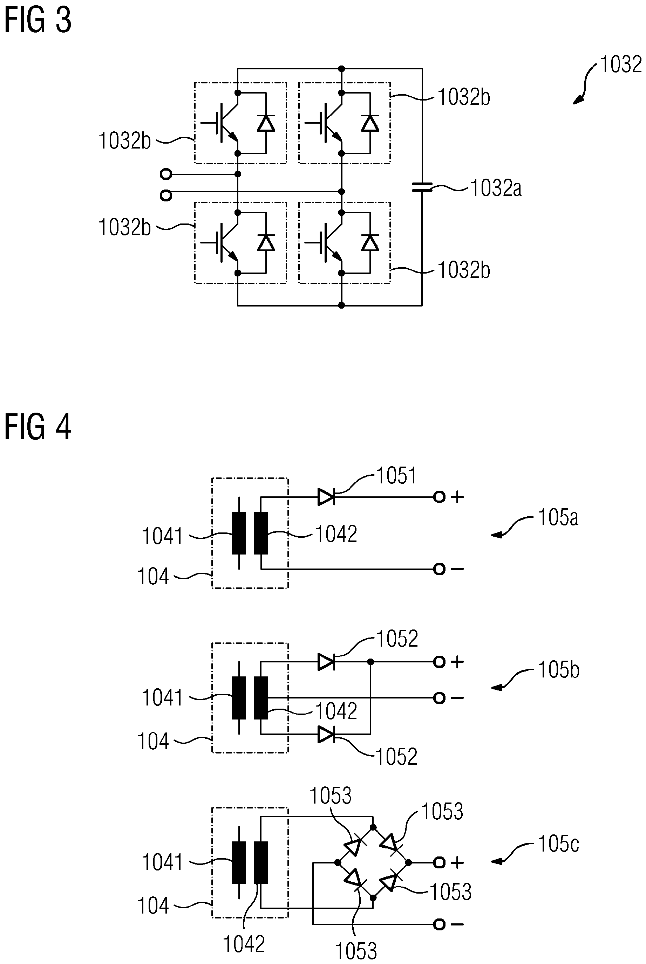

Die hochfrequente Wechselspannung auf Niederspannungsniveau wird eingangsseitig in einen AC/DC-Wandler 105 eingespeist, der eine Gleichrichtung vollzieht. Der AC/DC-Wandler 105 kann verschieden komplex aufgebaut sein. Verschiedene einfache Beispiele sind in Figur 4 dargestellt.

So kann es sich bei dem AC/DC-Wandler 105 beispielsweise um einen Einweg-Gleichrichter 105a handeln, d.h. im Wesentlichen um eine Diode 1051, die in Serie zur Sekundärspule 1042 des Transformators 104 geschaltet ist. Dabei kann die Diode 1051 in einer realen Umsetzung des Aufbaus durch eine Serie und/oder Parallelschaltung von mehreren diskreten Bauteilen gebildet sein. Der Aufbau richtet sich hier nach den Anforderungen, die durch den Stromfluss und die Spannung gegeben sind. Im elektrischen Sinn kann dieser Aufbau aber durch die einzelne Diode 1051 repräsentiert werden. Eine weitere Möglichkeit ist ein Mittelpunktgleichrichter 105b, bei dem ein Mittelabgriff der Sekundärspule 1042 des Transformators 104 als ein Pol der auszugebenden Gleichspannung dient und die beiden Enden der Sekundärspule 1042 des Transformators 104 über je eine serielle Diode 1052 zusammengeschaltet sind und als zweiter Pol dienen. Eine dritte Möglichkeit ist ein Brückengleichrichter 105c mit vier in Brückenschaltung angeordneten Dioden 1053. In anderen, nicht gezeigten Ausführungsformen können auch komplexere Gleichrichtertypen an der Stelle des AC/DC-Wandlers 105 eingesetzt werden.

Als Sollwert für eine Regelung der Gleichrichterschaltung dient der Strom, der für die Elektrolyse-Anlage 100 bereitgestellt wird. Dieser kann beispielsweise durch einen Stromwandler ermittelt werden, der dem AC/DC-Wandler 105 nachgeschaltet ist. Alternativ kann der Strom auch aus primärseitigen Messwerten, d.h. im Bereich des modularen Mehrpunktstromrichters ermittelt werden, indem diese in sekundärseitige Stromwerte umgerechnet werden. Dazu können die bekannten Daten zum Transformator 104 und dem AC/DC-Wandler 105 verwendet werden und beispielsweise der Strom vor oder hinter dem AC/AC-Wandler 103 ermittelt werden. Je nach Lage des tatsächlichen Stroms zum Sollwert für den Strom für die Elektrolyse-Anlage 100 wird das Spannungsniveau der zweiten Wechselspannung, die vom AC/AC-Wandler 103 erzeugt wird, angehoben oder abgesenkt.

Insgesamt wird so durch das Gleichrichtersystem 102 eine Stromversorgung für die Elektrolyse-Anlage 100 geschaffen, die galvanisch getrennt ist, ohne DC-Zwischenkreis auskommt und die Größe von Filterelementen und Transformator 104 reduziert.

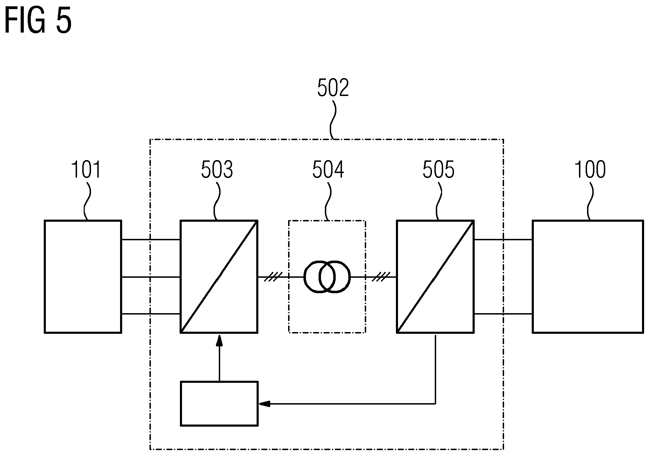

Ein weiteres Ausführungsbeispiel für die Erfindung ist in Figur 5 gezeigt, wiederum als Blockschaltbild. Wie in Figur 1 wird hier eine Versorgung der Elektrolyse-Anlage 100 aus dem Versorgungsnetzwerk 101 angegeben. Das Gleichrichtersystem 102 der Figur 1 ist aber hier durch ein Gleichrichtersystem 502 ersetzt. Das Gleichrichtersystem 502 hat den gleichen grundsätzlichen Aufbau wie das Gleichrichtersystem 102, umfasst aber einen AC/AC-Wandler 503, einen Transformator 504 und einen AC/DC-Wandler 505, die jeweils anders als die entsprechenden Elemente des Gleichrichtersystems 102 ausgestaltet sind.

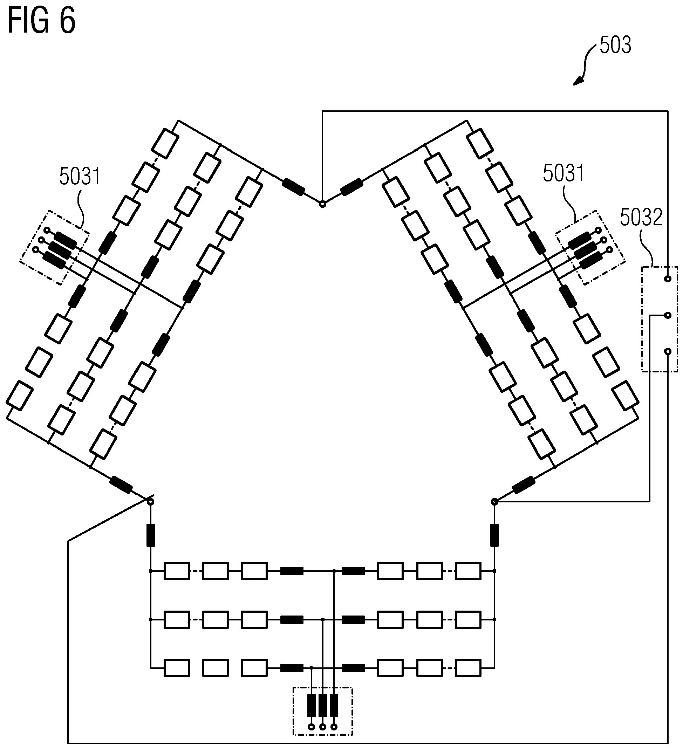

Der AC/AC-Wandler 503 basiert wie der AC/AC-Wandler 103 auf einem modularen Mehrpunktstromrichter, jedoch wandelt der AC/AC-Wandler 503 die eingangsseitig anliegende dreiphasige Mittelspannung in eine dreiphasige Wechselspannung mit erhöhter Frequenz von 10 kHz. Hierzu umfasst der AC/AC-Wandler 503 drei modulare Mehrpunktstromrichter nach Art der Figur 3. Diese sind in Delta-Verbindung angeordnet, d.h. je zwei Ausgangspole der modularen Mehrpunktstromrichter sind zu einem der Anschlüsse 5032 für die Phasen für die erzeugte dreiphasige Wechselspannung mit erhöhter Frequenz zusammengeschlossen. Alternativ kann auch eine sternförmige Anordnung verwendet werden. Eine entsprechende Anordnung in Deltaform ist in der Figur 6 dargestellt. Die Eingangsanschlüsse 5031 sind nach Phasen getrennt zusammengeschlossen und mit dem Versorgungsnetzwerk 101 verbunden. Die Mehrpunktstromrichter bilden also zusammen einen Direktumrichter aus.

Wie auch beim AC/AC-Wandler 103 ist die Steuerung des AC/AC-Wandlers 503 ausgestaltet, aus der Wechselspannung, die an den Eingängen anliegt, eine ausgangsseitige Wechselspannung mit einer erhöhten Frequenz zu erzeugen, wobei das Spannungsniveau der zweiten Wechselspannung durch die Steuerung an den Bedarf auf Seite der Elektrolyse-Anlage 100 angepasst wird.

Der Transformator 504 ist dreiphasig ausgestaltet und transformiert die eingehende dreiphasige Spannung auf Mittelspannungsniveau, aber mit hoher Frequenz, in eine weiterhin dreiphasige Wechselspannung auf Niederspannungsniveau bei gleichbleibend hoher Frequenz.

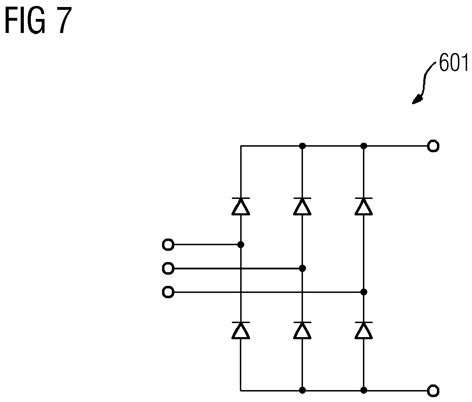

Der AC/DC-Wandler 505 ist in diesem Ausführungsbeispiel beispielsweise ein ungesteuerter Sechspuls-Brückengleichrichter 601 mit Dioden nach Art der Figur 7.

## Patentansprüche

1. Gleichrichterschaltung (102, 502) zur Wandlung einer eingangsseitig anliegenden Wechselspannung mit einer Netzfrequenz, insbesondere aus einem Mittelspannungsnetzwerk (101) mit einer Spannung von zwischen 1 kV und 100 kV, in eine ausgangsseitige Gleichspannung für eine Elektrolyse-Anlage (100), mit
- wenigstens einem modularen Mehrpunktstromrichter (103, 503), ausgestaltet zur Wandlung der Wechselspannung in eine zweite, ein- oder mehrphasige Wechselspannung mit einer gegenüber der Netzfrequenz erhöhten Frequenz,
- einem Transformator (104, 504) zur galvanisch getrennten Weitergabe der zweiten Wechselspannung,
- einem Gleichrichter (105, 505),
wobei der Transformator (104, 504) zwischen den Gleichrichter (105, 505) und den modularen Mehrpunktstromrichter (103, 503) geschaltet ist und der Gleichrichter (105, 505) ausgangsseitig die Gleichspannung bereitstellt.

2. Gleichrichterschaltung (102, 502) nach Anspruch 1, bei der die zweite Wechselspannung eine Frequenz von zwischen 500 Hz und 50 kHz, insbesondere zwischen 5 KHz und 20 kHz aufweist.

3. Gleichrichterschaltung (102, 502) nach Anspruch 1 oder 2, bei der die zweite Wechselspannung eine dreiphasige Wechselspannung ist und drei modulare Mehrpunktstromrichter (503) vorhanden sind.

4. Gleichrichterschaltung (102, 502) nach Anspruch 3, bei der der Gleichrichter (105, 505) ein 6-Puls-Brückengleichrichter (601) ist.

5. Gleichrichterschaltung (102, 502) nach einem der vorangehenden Ansprüche, bei der die zweite Wechselspannung eine einphasige Wechselspannung ist und bei der der Gleichrichter (105, 505) ein diodenbasierter Gleichrichter (105a...c), insbesondere ein Einweg-Gleichrichter (105a), ein Mittelpunktgleichrichter (105b) oder ein Brückengleichrichter (105c) ist.

6. Gleichrichterschaltung (102, 502) nach einem der vorangehenden Ansprüche, bei der der modulare Mehrpunktstromrichter (103, 503) Module (1032) umfasst, die jeweils eine H-Brücke aufweisen.

7. Elektrolyseeinrichtung mit einer Elektrolyse-Anlage (100) und einer Gleichrichterschaltung (102, 502) nach einem der vorangehenden Ansprüche zur Bereitstellung elektrischer Energie für die Elektrolyse-Anlage (100) mittels einer Gleichspannung.

8. Verfahren zur Bereitstellung einer Gleichspannung für eine Elektrolyse-Anlage (100), bei dem eine eingangsseitig anliegende Wechselspannung mit einer Netzfrequenz, insbesondere aus einem Mittelspannungsnetzwerk (101) mit einer Spannung von zwischen 1 kV und 100 kV, in eine ausgangsseitige Gleichspannung für eine Elektrolyse-Anlage (100) gewandelt wird, wobei
- wenigstens ein modularen Mehrpunktstromrichter (103, 503) verwendet wird, die Wechselspannung in eine zweite, ein- oder mehrphasige Wechselspannung mit einer gegenüber der Netzfrequenz erhöhten Frequenz zu wandeln,
- ein Transformator (104, 504) die zweite Wechselspannung galvanisch getrennt weitergibt,
- ein Gleichrichter (105, 505), die weitergegebene zweite Wechselspannung gleichrichtet und ausgangsseitig die Gleichspannung bereitstellt.
